# EUROPEAN PATENT APPLICATION

(11) **EP 2 763 006 A1**
(43) Date of publication of application: **06.08.2014**
(21) Application number: 13153444.8
(22) Date of filing: 31.01.2013
(51) Int. Cl.: G06F 3/041, G06F 3/044

(54) **Electronic device including touch-sensitive display and method of detecting touches**

(71) Applicant: BlackBerry Limited, Waterloo, ON N2K 0A7 (CA)
(72) Inventor: Parekh, Premal Vinodchandra, Waterloo, Ontario N2L 3W8 (CA); Singh, Amit Pal, Waterloo, Ontario N2L 3W8 (CA)
(74) Representative: Fennell, Gareth Charles

(57) **Abstract**

An electronic device includes a touch-sensitive display. The touch-sensitive includes a first set of drive electrodes and a first set of sense electrodes configured to detect touches on a first area of the touch-sensitive display, and a second set of drive electrodes and a second set of sense electrodes configured to detect touches on a second area of the touch-sensitive display. At least one controller is operably coupled to the first set of drive electrodes, the first set of sense electrodes, the second set of drive electrodes, and the second set of sense electrodes, and is configured to drive electrodes of the first set of drive electrodes while driving electrodes of the second set of drive electrodes. The first area is different from the second area.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

An electronic device includes a touch-sensitive display. The touch-sensitive display includes a first set of drive electrodes and a first set of sense electrodes configured to detect touches on a first area of the touch-sensitive display, a second set of drive electrodes and a second set of sense electrodes configured to detect touches on a second area of the touch-sensitive display, and at least one controller operably coupled to the first set of drive electrodes, the first set of sense electrodes, the second set of drive electrodes, and the second set of sense electrodes, and configured to drive electrodes of the first set of drive electrodes while driving electrodes of the second set of drive electrodes The first area is different from the second area. A method includes detecting touches on a touch-sensitive display of an electronic device by driving drive electrodes of a first set of drive electrodes while sensing utilizing sense electrodes of a first set of sense electrodes and driving drive electrodes of a second set of drive electrodes while sensing utilizing sense electrodes of a second set of sense electrodes. The drive electrodes of the first set are driven while driving the drive electrodes of the second set. The first set of sense electrodes is different from the second set of drive electrodes.

### Brief Description of the Drawings

FIG. 1 is a block diagram of a portable electronic device in accordance with the disclosure.

FIG. 2 is a front view of an electronic device in accordance with the disclosure.

FIG. 3 is a flowchart illustrating a method of detecting touches in accordance with the disclosure.

FIG. 4 is a front view of another electronic device in accordance with the disclosure.

### Detailed Description

The following describes an electronic device and a method of detecting touches on a touch-sensitive display of an electronic device. Sets of drive electrodes and sets of sense electrodes are utilized for detecting touches. One set of drive electrodes and one set of sense electrodes are utilized to detect touches on one area of the touch-sensitive display. Another set of drive electrodes and another set of sense electrodes are utilized to detect touches on another area of the touch-sensitive display. The drive electrodes of the first set are driven while driving the drive electrodes of the second set. The first set of sense electrodes is different from the second set of drive electrodes. Thus, two drive electrodes may be driven simultaneously, for example, to reduce the scanning rate of the touch-sensitive display compared to a touch-sensitive display in which electrodes are driven one at a time.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

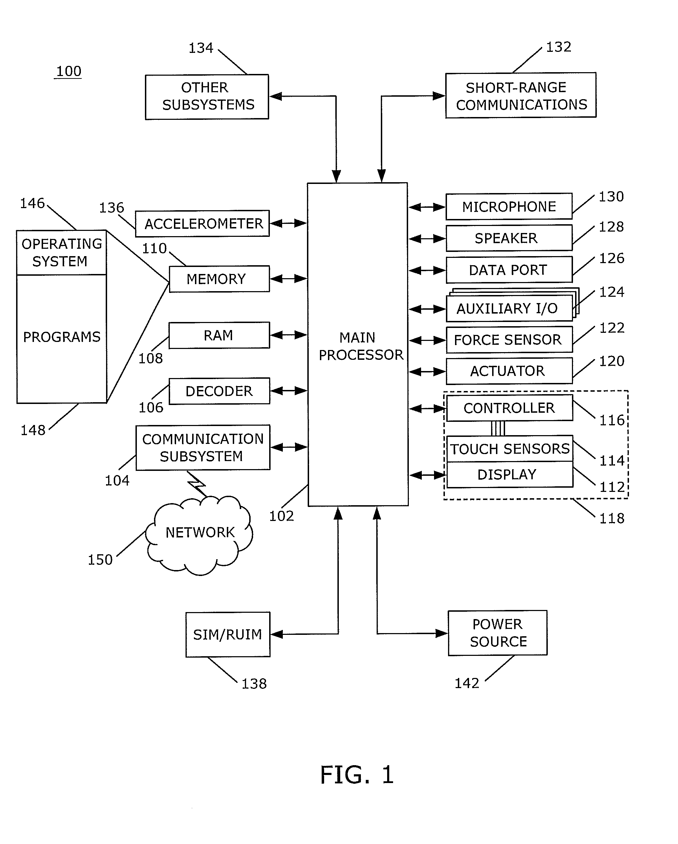

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

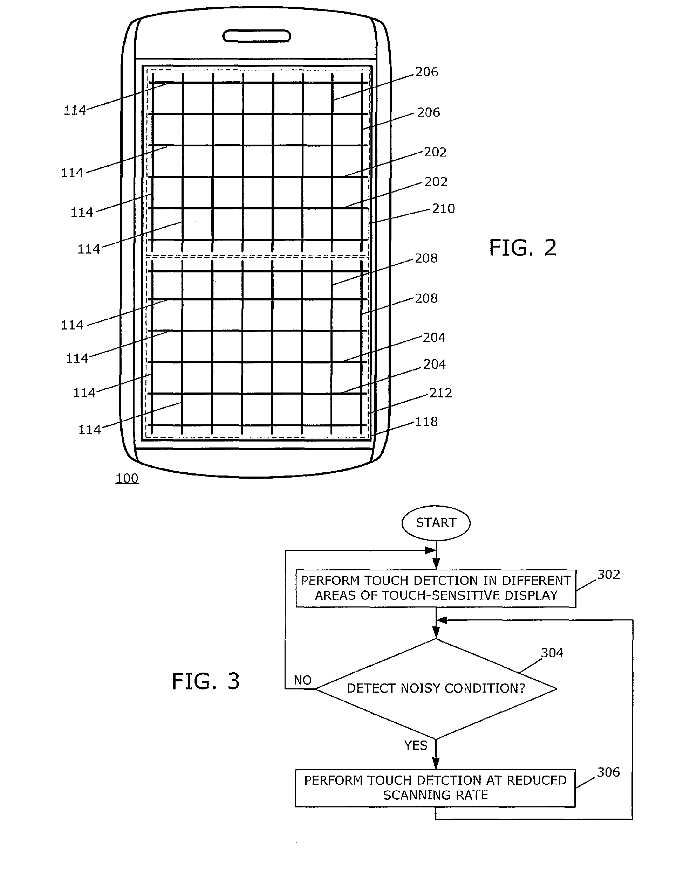

A front view of an electronic device 100 is shown in FIG. 2. Four sets of touch sensors 114, also referred to as touch-sensing electrodes, are illustrated in the example of FIG. 2. The touch sensors 114 are shown for the purpose of illustration, but are not visible to the eye when looking at the front view of the electronic device 100.

The touch sensors 114 include a first set of drive electrodes 202 and a second set of drive electrodes 204. Both the first set of drive electrodes 202 and the second set of drive electrodes 204 extend generally horizontally in the view illustrated in FIG. 2. The touch sensors 114 also include a first set of sense electrodes 206 and a second set of sense electrodes 208. Both the first set of sense electrodes 206 and the second set of sense electrodes 208 extend generally vertically in the view illustrated in FIG. 2. The first set of sense electrodes 206 cross over and are electrically isolated from the first set of drive electrodes 202 for detecting touches on a first area 210 of the touch-sensitive display 118. The second set of sense electrodes 208 cross over and are electrically isolated from the second set of drive electrodes 204 for detecting touches on a second area 212, that is adjacent to the first area 210. In the example of FIG. 2, the first set area 210 is about one half of the area of the touch-sensitive display 118 and the second area 212 is the other half of the area of the touch-sensitive display 118. The terms "vertically" and "horizontally" are utilized herein to provide reference to an orientation of the electronic device 100 in the drawings and are not otherwise limiting.

In the example of FIG. 2, the sense electrodes 206 of the first set of sense electrodes 206 are generally vertically aligned with the sense electrodes 208 of the second set of sense electrodes 208 such that the sense electrodes 208 of the first set are located at the same x coordinate locations as the sense electrodes of the second set. Alternatively, the sense electrodes 206 of the first set of sense electrodes 206 may be offset from the sense electrodes 208 of the second set of sense electrodes 208 such that the first set of sense electrodes 206 are not aligned with the second set of sense electrodes 208.

All of the drive electrodes 202, 204 and all of the sense electrodes 206, 208 are operably coupled to the controller 116. Alternatively, different controllers may be utilized for each different set of electrodes for each area. The drive electrodes 202 of the first set of drive electrodes 202 are electrically isolated from the drive electrodes 204 of the second set of drive electrodes 204. The sense electrodes 206 of the first set of sense electrodes 206 are electrically isolated from the sense electrodes 208 of the second set of sense electrodes 208. Touches may be detected on the first area 210 of the touch-sensitive display 118 while detecting touches on the second area 212 of the touch-sensitive display 118. Thus, the controller 116 is configured to drive the drive electrodes 202 of the first set of drive electrodes 202 to detect touches on the first area 210 of the touch-sensitive display 118 while driving drive electrodes 204 of the second set of drive electrodes 204 to detect touches on the second area 212 of the touch-sensitive display 118. Pairs of drive electrodes 202, 205 are driven simultaneously or nearly simultaneously such that a drive electrode 202 of the first set of drive electrodes 202 is driven while driving a drive electrode 204 of the second set of drive electrodes 204. Thus, two electrodes, one from each area, are driven during the same period of time. The term "while," as utilized herein, includes: driving the two electrodes, one from each set during the same period of time; driving the two electrodes, one from each set, synchronously or asynchronously; driving one electrode from one set overlapping at least partially in time with driving an electrode from another set; driving the drive electrodes such that driving time of the drive electrode in the first set overlaps at least partially in time with the driving time of the drive electrode of the second set; driving the drive electrode from one set may begin at the same time or may begin at a different time as driving the drive electrode from another set; driving the drive electrode from the first set of electrodes may end at the same time or may end at a different time as driving the drive electrode from the second set of electrodes. For example, driving the drive electrode 204 of the second set may begin after driving the drive electrode 202 of the first set begins or vice versa. For example, driving the drive electrode 202 of the first set may end before driving the drive electrode 204 of the second set ends.

The electrodes may be driven in frames comprising one or more pulses. Driving drive electrodes 202 of the first set of drive electrodes 202 may by synchronous with driving drive electrodes 204 of the second set of drive electrodes 204 such that pulses of signal are carried by a drive electrode 202 of the first set of drive electrodes 202 at the same time pulses of signal are carried by a drive electrode 204 of the second set of drive electrodes 204. Alternatively, the pulses carried by the two drive electrodes may be asynchronous. A drive electrode 202 is driven while driving the drive electrode 204 includes when the frame in which the drive electrode 202 is driven overlaps in time with a frame in which the drive electrode 204 is driven as well as when the pulse in which the drive electrode 202 is driven overlaps in time with a pulse in which the drive electrode 204 is driven.

Because drive electrodes 202 of the first set of drive electrodes 202 may be driven while driving drive electrodes 204 of the second set of drive electrodes 204, and while sensing utilizing two different sets of sense electrodes 206, 208, the scanning time during touch detection may be reduced while determining locations of touches.

The controller may be configured to control the number of pulses of signal carried by the drive electrodes 202, 204 during touch detection. The number of pulses of signal may be increased or decreased during touch detection, based on conditions during touch detection. For example, when noise is detected, the number of pulses of signal may be increased during touch detection to reduce the effect of noise. Thus, the scanning rate of the touch-sensitive display decreases, increasing the time to detect touches on the touch-sensitive display 118. Noise may be detected by the electronic device 100, such as a portable electronic device. For example, noise may be detected based on signals from the sense electrodes 206, 208 during periods of time in which the drive electrodes 202, 204 are not driven. Noise filtering may also be carried out. Digital filtering such as infinite impulse response (IIR) filtering may be carried out. When noise is no longer detected, the number of pulses of signal carried by each drive electrode may be reduced.

Alternatively, the processor 102 may be configured to detect that the electronic device 100 is plugged in to an external power source, such as a wall socket. The processor 102 may send a signal to the controller 116. In response to receipt of the signal, the controller 116 may increase the number of pulses of signal carried by the drive electrodes 202, 204 when the electronic device 100 is plugged in. When the electronic device 100 is unplugged from the external power source, the controller 116 may reduce the number of pulses of signal carried by the drive electrodes 202, 204. Noise affecting touch detection is known to increase when an electronic device is coupled to an external power source. By detecting when the electronic device 100 is plugged in, the pulses of signal carried by the drive electrodes may be controlled to reduce the effect of noise.

A flowchart illustrating a method of detecting touches on the touch-sensitive display 118 of an electronic device, such as a portable electronic device, is illustrated in FIG. 3. The method may be carried out by software executed, for example, by the controller 116 and/or the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the electronic device to perform the method may be stored in a computer-readable storage medium, device, or apparatus, which may be a non-transitory or tangible storage medium, device, or apparatus.

Touch detection is performed 302 to detect touches on the first area 210 of the touch-sensitive display 118 while detecting touches on the second area 212 of the touch-sensitive display 118. Thus, drive electrodes 202 of the first set of drive electrodes 202 are driven while sensing utilizing the first set of sense electrodes 204. Drive electrodes 204 of the second set of drive electrodes 204 are driven while sensing utilizing the second set of sense electrodes 208. Drive electrodes 202 of the first set of drive electrodes 202 are driven while driving drive electrodes 204 of the second set of drive electrodes 204. The drive electrodes 202, 204 may be driven with a predetermined number of pulses. For example, each drive electrode 202, 204 may be driven with 4 pulses when noise is not detected.

When a noisy condition is detected 304, touch detection parameters are changed 306 to reduce the effect of noise on touch detection. A noisy condition may be detected by sensing utilizing the sense electrodes 206, 208 during periods of time in which the drive electrodes 202, 204 are not driven. Alternatively, a noisy condition may be detected by detecting that the electronic device 100 is plugged in to an external power source. For example, a current detection circuit may be utilized between the charging port of the device 100 and a battery 142 of the device to detect when the batter is being charged.

The parameters that are changed may include, for example, the number of pulses of signal utilized to drive the drive electrodes, the scanning rate, filtering, and so forth. The drive electrodes 202, 204 may be driven with a greater number of pulses than the number utilized when no noise is detected. For example, each drive electrode 202, 204 may be driven with 8 pulses when a noisy condition is detected. The time to perform a scan of the touch-sensitive display 118 may be greater when a greater number of pulses is utilized to drive the drive electrodes 202, 204. Thus, the scanning rate of the touch-sensitive display 118 is reduced. Optionally, noise filtering may be increased. For example, the order of the filter may be increased to increase the filtering.

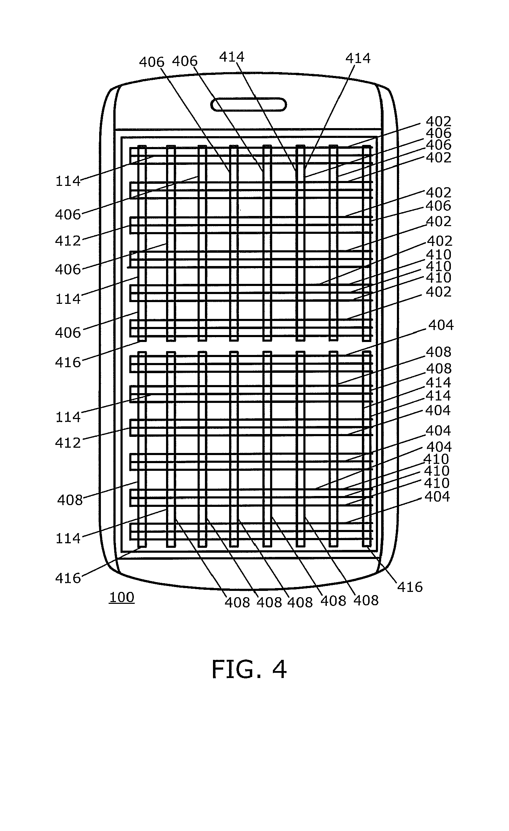

A front view of another example of an electronic device 100 is shown in FIG. 4. Sets of touch sensors 114, also referred to as touch-sensing electrodes, are illustrated in the example of FIG. 4. The touch sensors 114 are shown for the purpose of illustration, but are not visible to the eye when looking at the front view of the electronic device 100.

The touch sensors 114 include a first set of drive electrodes 402 and a second set of drive electrodes 404. Both the first set of drive electrodes 402 and the second set of drive electrodes 404 extend generally horizontally. In the example of FIG. 4, the drive electrodes 402, 404 include three generally horizontal detection lines 410 that are joined together at one end 412.

The touch sensors 114 also include a first set of sense electrodes 406 and a second set of sense electrodes 408. Both the first set of sense electrodes 406 and the second set of sense electrodes 408 extend generally vertically. In the example of FIG. 4, the sense electrodes 406, 408 include two generally vertical detection lines 414 that are joined at the ends 416.

Other shapes of drive and sense electrodes may successfully be implemented. Also, the drive electrodes may extend generally vertically and the sense electrodes may extend generally horizontally.

Utilizing two different sets of sense electrodes, two drive electrodes may be driven simultaneously or near simultaneously such that two different areas of the touch-sensitive display are scanned during the same time. By driving drive electrodes of the first set of drive electrodes while driving the drive electrodes of the second set of electrodes, touches may be detected in less time than the time to detect touches by driving one drive electrode at a time. The time to scan the touch-sensitive display for touches may be reduced, for example, to half the time, to detect touches by driving one drive electrode at a time. When detecting touches during horizontal and/or vertical blanking times of the display, reduction in time is advantageous.

The number of pulses of signal utilized to drive the drive electrodes may also be increased when noise is detected. Although the scanning rate is reduced when more pulses of signal are utilized to drive the drive electrodes, sufficient scanning rate to detect touches, including taps and gestures, may be maintained by driving two drive electrodes at a time.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device comprising:
a touch-sensitive display comprising:
a first set of drive electrodes and a first set of sense electrodes configured to detect touches on a first area of the touch-sensitive display;
a second set of drive electrodes and a second set of sense electrodes configured to detect touches on a second area of the touch-sensitive display;
at least one controller operably coupled to the first set of drive electrodes, the first set of sense electrodes, the second set of drive electrodes, and the second set of sense electrodes, and configured to drive electrodes of the first set of drive electrodes while driving electrodes of the second set of drive electrodes;
wherein the first area is different from the second area, the first set of drive electrodes is different from the second set of drive electrodes, and the first set of sense electrodes is different from the second set of sense electrodes.

2. The electronic device according to claim 1, wherein electrodes of the first set of sense electrodes are aligned with electrodes of the second set of sense electrodes.

3. The electronic device according to claim 1, wherein the first area is adjacent to the second area.

4. The electronic device according to claim 1, wherein the controller is configured to increase a number of pulses of signal carried by electrodes of the first set of drive electrodes and a number of pulses of signal carried by electrodes of the second set of drive electrodes to reduce the effect of noise on touch detection.

5. The electronic device according to claim 1, wherein the controller is configured to reduce a scanning rate of the touch-sensitive display to reduce the effect of noise when detecting touches.

6. The electronic device according to claim 1, comprising a battery, and, in response to detecting charging of the battery, the controller increases a number of pulses of signal carried by electrodes of the first set of drive electrodes and a number of pulses of signal carried by electrodes of the second set of drive electrodes to reduce the effect of noise on touch detection.

7. The electronic device according to claim 1, wherein the controller is configured to drive an electrode of the first set of drive electrodes while driving an electrode of the second set of drive electrodes.

8. The electronic device according to claim 1, wherein pairs of drive electrodes are driven simultaneously such that an electrode of the first set of drive electrodes is driven while driving an electrode of the second set of drive electrodes.

9. A method comprising:
detecting touches on a touch-sensitive display of an electronic device by:
driving drive electrodes of a first set of drive electrodes while sensing utilizing sense electrodes of a first set of sense electrodes;
driving drive electrodes of a second set of drive electrodes while sensing utilizing sense electrodes of a second set of sense electrodes;
wherein the drive electrodes of the first set are driven while driving the drive electrodes of the second set;
wherein the first area is different from the second area, the first set of drive electrodes is different from the second set of drive electrodes, and the first set of sense electrodes is different from the second set of sense electrodes.

10. The method according to claim 9, comprising detecting a noisy condition while detecting touches on the touch-sensitive display and increasing noise filtering.

11. The method according to claim 9, comprising increasing a number of pulses of signal carried by the drive electrodes of the first set and increasing a number of pulses of signal carried by the drive electrodes of the second set when detecting touches to reduce the effect of noise on touch detection.

12. The method according to claim 9, comprising reducing a scanning rate of the touch-sensitive display to reduce the effect of noise when detecting touches.

13. The method according to claim 9, comprising, in response to detecting charging of a battery of the electronic device when detecting touches, increasing a number of pulses of signal carried by the drive electrodes of the first set and increasing a number of pulses of signal carried by the drive electrodes of the second set.

14. The method according to claim 9, wherein a drive electrode of the first set of drive electrodes is driven while driving a drive electrode of the second set of drive electrodes.

15. A computer-readable storage device having computer-readable code stored thereon, the computer-readable code executable by at least one processor of the electronic device to perform the method of claim 9.
